(19)

Europäisches Patentamt
European Patent Office
Office européen des brevets

(11) **EP 4 640 305 A1**

(12) **EUROPEAN PATENT APPLICATION**
published in accordance with Art. 153(4) EPC

(43) Date of publication:
**29.10.2025 Bulletin 2025/44**

(21) Application number: **24760228.7**

(22) Date of filing: **14.02.2024**

(51) International Patent Classification (IPC):
*B01D 69/02* (2006.01)        *B01D 61/46* (2006.01)
*B01D 71/02* (2006.01)        *C04B 35/462* (2006.01)
*C25B 1/16* (2006.01)         *C25B 13/02* (2006.01)
*C25B 13/04* (2021.01)

(52) Cooperative Patent Classification (CPC):
**B01D 61/46; B01D 69/02; B01D 71/02;
C04B 35/462; C25B 1/16; C25B 13/02;
C25B 13/04;** Y02E 60/10

(86) International application number:
**PCT/JP2024/005107**

(87) International publication number:
**WO 2024/176927 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2023 JP 2023025133**

(71) Applicant: **Japan Fine Ceramics Co., Ltd.
Sendai-shi, Miyagi 981-3206 (JP)**

(72) Inventors:
• **KIMURA, Hiromitsu**
  **Sendai-shi, Miyagi 981-3206 (JP)**
• **SATO, Masayuki**
  **Sendai-shi, Miyagi 981-3206 (JP)**

(74) Representative: **Dr. Schön, Neymeyr & Partner
Patentanwälte mbB
Bavariaring 26
80336 Munich (DE)**

(54) **LITHIUM-SELECTIVE TRANSMISSION MEMBRANE AND METHOD FOR MANUFACTURING LITHIUM-SELECTIVE TRANSMISSION MEMBRANE**

(57)    The present invention provides a lithium-selective permeable membrane that can be used to recover lithium ions without performing complicated treatments on the lithium-selective permeable membrane, and that can reduce the time and cost required for recovering lithium ions. A lithium-selective permeable membrane 10 of the present invention includes a sintered body of a lithium-ion conductor. At least a part of a region of an outer surface of the lithium-selective permeable membrane 10 is composed of a surface-roughened surface 101.

FIG.4

EP 4 640 305 A1

**Description**

Technical Field

The present invention relates to a lithium-selective permeable membrane that lithium ions selectively permeate through, and a method for producing such lithium-selective permeable membrane.

Background Art

Metals such as rare metals are found in smaller quantities in the crust of the Earth than other substances, and due to technical difficulties in mining and refining, the amount of rare metals on the market is small. On the other hand, such metals are used as additives to structural materials, in electronic and magnetic materials such as light-emitting diodes, batteries, and permanent magnets, and in functional materials such as photocatalysts and new glass, and in recent years have been attracting a great deal of attention.

For example, lithium, which is one rare metal, is used in the production of materials for lithium-ion batteries and fuel for nuclear fusion reactors, and demand for lithium has been expanding in recent years. To supply lithium for these uses, technology is needed to produce large quantities of lithium at low cost.

Rare metals such as lithium can be extracted from ores contained in the crust of the Earth, but as mentioned above, there are technical difficulties with lithium, making mass production difficult.

In recent years, therefore, technology has been developed to extract ions derived from rare metals contained in seawater. Seawater contains a plurality of ions, and the amount of these ions contained can be enormous compared to the amount of rare metals buried underground. It is also known that industrial waste (such as discarded lithium secondary batteries) contains large amounts of a plurality of ions. However, seawater and industrial waste contain not only representative rare metal ions (such as lithium ions), but also other metal ions such as potassium, sodium, and calcium. Therefore, in order to recover the target ions, membranes (selective permeable membrane) that separate the target ions from other metal ions are being developed.

On the other hand, the concentration of rare metal elements as ions contained in seawater or industrial waste (such as discarded lithium secondary batteries) is low, and the ion permeation rate for recovering the target ions with a selective permeable membrane is also low. Therefore, with conventional technology, there has been a problem in that it requires a long time and high cost to recover the target ions from seawater or industrial waste (such as discarded lithium secondary batteries).

In order to solve such problems, Patent Literature 1 discloses a technique for extracting lithium ions from salt lake brine or lithium ore having a relatively high lithium concentration, or from industrial waste (such as discarded lithium secondary batteries) or seawater having a relatively low lithium concentration. Patent Literature 1 discloses a lithium-selective permeable membrane having a lithium adsorption layer, which is composed of a material different from the lithium-selective permeable membrane body, formed on one surface of the membrane by an acid treatment. It has been revealed that such a lithium-selective permeable membrane can recover lithium ions from a raw solution at a high recovery rate.

Citation List

Patent Literature

Patent Literature 1:Japanese Patent Laid-Open No. 2017-131863

Summary of Invention

Technical Problem

However, while the lithium-selective permeable membrane of Patent Literature 1 can increase the recovery rate of lithium ions, it is necessary to treat one surface of the lithium-selective permeable membrane with an acid, which makes the production of the lithium-selective permeable membrane complicated. Even if one surface of the lithium-selective permeable membrane is treated with an acid, there still remains a problem that a long time and high cost are required to recover the lithium.

In order to solve these problems, an object of the present invention is to provide a lithium-selective permeable membrane that can recover lithium ions without subjecting the lithium-selective permeable membrane to complicated treatments, and that can reduce the time and cost required for recovering the lithium ions, and a method for producing the lithium-selective permeable membrane.

Solution to Problem

To achieve the above-described object, the lithium-selective permeable membrane of the present invention is characterized by having the following invention-specifying matters.

(1) A lithium-selective permeable membrane of the present invention is a lithium-selective permeable membrane including a sintered body of a lithium-ion conductor, wherein at least a part of a region of an outer surface of the lithium-selective permeable membrane is composed of a surface-roughened surface.

Generally, when a lithium-ion conductor is used as a lithium-selective membrane, the lithium-ion conductor is often used as a sintered body. The structure or composition of the sintered body near the outer surface that comes into contact with the sintering atmosphere during sintering is often different from the internal structure or composition that is not affected by the sintering atmosphere during sintering. According to the lithium-selective permeable membrane of (1), the portion having the structure or composition near the outer surface that has changed during sintering is removed by a surface roughening treatment, and the portion having the structure or composition that is not affected by the sintering atmosphere during sintering is exposed on the surface of the lithium-selective permeable membrane. Therefore, the structure or composition of the ion conductor can be made uniform on the outer surface and inside of the lithium-selective permeable membrane.

Further, because the structure or composition near the outer surface that comes into contact with the sintering atmosphere during sintering changes during sintering, the lithium ion permeation rate in this region is slower than the original lithium ion permeation rate (the lithium ion permeation rate in the region not affected by the sintering atmosphere during sintering). According to the lithium-selective permeable membrane of (1), because the region having the structure or composition of the ion conductor that is not affected by the sintering atmosphere during sintering is exposed on the outer surface of the selective permeable membrane, the decrease in the lithium ion permeation rate can be avoided. As a result, according to the lithium-selective permeable membrane of (1), the time and cost required for lithium-ion recovery can be reduced.

(2) Further, it is preferred that the lithium-selective permeable membrane of the present invention satisfies at least one of the following requirements (A), (B), and (C):

(A) an arithmetic mean height Ra of all or a part of the surface of the surface-roughened surface is 0.8 $\mu$m or more and 20 $\mu$m or less;
(B) a root mean square gradient Rdq of all or a part of the surface of the surface-roughened surface is 10° or more and 80° or less; and
(C) a developed interfacial area ratio Sdr of all or a part of the surface of the surface-roughened surface is 0.2 or more and 2 or less.

According to the lithium-selective permeable membrane of (2), at least one of the requirement that an arithmetic mean height Ra of all or a part of the surface of the surface-roughened surface is 0.8 $\mu$m or more, the requirement that a root mean square gradient Rdq of all or a part of the surface of the surface-roughened surface is 10° or more, and the requirement that a developed interfacial area ratio Sdr of all or a part of the surface of the surface-roughened surface is 0.2 or more, is satisfied. Therefore, the surface area of the lithium-ion conductor can be substantially expanded. Therefore, lithium ions are brought into a lithium-selective permeable membrane through a lithium-ion conductor having a large surface area, and as a result, the lithium-ion recovery rate can be increased.

From the viewpoint of lithium-ion recovery rate, the larger the above values of Ra, Rdq, and Sdr, the more preferable it is. On the other hand, the larger the values of Ra, Rdq, and Sdr are, the greater the risk of damage to the lithium-selective permeable membrane during the surface roughening treatment. In addition, the time and cost required for the surface roughening treatment also increase. Therefore, in order to stably produce a lithium-selective permeable membrane that includes a lithium-ion conductor having a large surface area, it is preferable to satisfy at least one of the requirement that the arithmetic mean height Ra of the surface-roughened surface of the lithium-ion conductor is 20 $\mu$m or less, the requirement that the root mean square gradient Rdq is 80° or less, and the requirement that the developed interfacial area ratio Sdr is 2 or less.

(3) Further, in the lithium-selective permeable membrane of the present invention, it is preferred that a step-and-terrace structure is absent on sintered body particles of all or a part of the surface of the surface-roughened surface.

The lithium-selective permeable membrane of (3) does not have a step-and-terrace structure formed on the surface of the sintered body particles by a heat treatment in the sintering step or an annealing step, on the surface of the sintered body particles exposed on all or a part of the surface-roughened surface. Therefore, the surface that does not come into direct contact with the sintering atmosphere during the heat treatment is sufficiently exposed. Therefore, the lithium-selective permeable membrane of (3) can reduce the time and cost required for lithium-ion recovery.

(4) Further, it is preferred that in the lithium-selective permeable membrane of the present invention, the lithium-ion conductor is a sintered body of a lithium lanthanum titanate.

According to the lithium-selective permeable membrane of (4), the lithium-ion conductor is a sintered body of a lithium lanthanum titanate. As the lithium-ion conductor, lithium lanthanum titanate has an excellent lithium ion conduction rate. In addition, it is possible for the lithium ions to stably permeate in an aqueous solution. Therefore, the lithium-selective permeable membrane of (4) can reduce the time and cost required for lithium recovery.

(5) Further, it is preferred that in the lithium-selective permeable membrane of the present invention, in a lithium permeation test in a temperature range of 22°C or more and 24°C or less, a lithium permeation rate V represented by the following formula (1) is 0.4 mmol/(hr·cm$^2$·(mol/L)) or more,

$$V = M/(T \cdot S \cdot C) \; (1)$$

wherein M is a permeation amount (mmol) of lithium ions that have permeated through the lithium-selective permeable membrane, T is a time (hr) required for permeation of lithium ions in the permeation amount M, S is an effective membrane area (cm$^2$) of the lithium-selective permeable membrane, and C is a lithium ion concentration (mol/L) in a raw solution.

According to the lithium-selective permeable membrane of (5), the lithium permeation rate V is 0.4 mmol/(hr·cm$^2$·(mol/L)) or more. Therefore, the lithium-selective permeable membrane of (5) can reduce the time and cost required for lithium recovery.

In addition, the method for producing a lithium-selective permeable membrane in order to solve the above-described object of the present invention is characterized by having the following invention-specifying matters.

(6) A method for producing a lithium-selective permeable membrane of the present invention includes:

a sintering step of sintering a molded body that includes a lithium-ion conductor; and
a surface roughening treatment step of removing at least a part of a region of an outer surface of the sintered body and roughening the surface after the sintering.

According to the method for producing a lithium-selective permeable membrane of (6), all or a part of the portion that originally existed on the outer surface of the lithium-ion conductor and whose structure or composition has changed due to coming into contact with the sintering atmosphere during sintering can be removed by a surface roughening treatment, thereby enabling the lithium-selective permeable membrane according to (1) to (5) to be produced. Therefore, the lithium-selective permeable membrane produced by production method of (6) can reduce the time and cost required for lithium-ion recovery.

(7) Further, in the method for producing a lithium-selective permeable membrane of the present invention, it is preferred that at least one of the following requirements (A), (B), and (C) is satisfied:

(D) an arithmetic mean height Ra of all or a part of the surface of the sintered body surface roughened in the surface roughening treatment step is 0.8 μm or more and 20 μm or less;
(E) a root mean square gradient Rdq of all or a part of the surface of the sintered body surface roughened in the surface roughening treatment step is 10° or more and 80° or less; and
(F) a developed interfacial area ratio Sdr of all or a part of the surface of the sintered body surface roughened in the surface roughening treatment step is 0.2 or more and 2 or less.

According to the method for producing a lithium-selective permeable membrane of (7), the lithium-selective permeable membrane of (2) can be produced. Therefore, the lithium-selective permeable membrane produced by the production method of (7) can reduce the time and cost required for recovering lithium ions.

(8) Further, in the method for producing a lithium-selective permeable membrane of the present invention, it is preferred that the surface roughening treatment is a blasting treatment.

According to the method for producing a lithium-selective permeable membrane of (8), the removal of the surface of the sintered body and the surface roughening treatment are simultaneously performed in a short time by a blasting treatment. In addition, residual stress can be applied to the lithium-ion conductor, and the strength and durability of the lithium-ion conductor and the lithium-selective permeable membrane can be improved. Therefore, a lithium-selective permeable membrane having excellent durability can be produced without complicating the production steps of the lithium-selective permeable membrane.

Brief Description of Drawings

FIG. 1 is a schematic diagram of a lithium-ion recovery device that uses a lithium-selective permeable membrane.

FIG. 2 shows the results of powder X-ray diffraction measurement carried out by pulverizing the sintered body of the lithium-ion conductor prepared in Example 1.

FIG. 3 is an SEM image of the sintered body of the lithium-ion conductor prepared in Example 1 before the surface roughening treatment (as-sintered).

FIG. 4 is an SEM image of the surface-roughened surface of the sintered body of the lithium-ion conductor prepared in Example 1 after the surface roughening treatment.

FIG. 5 shows the current-time profile when a lithium recovery test was conducted using the lithium-selective permeable membrane prepared in Example 1.

FIG. 6 is an SEM image of the surface-roughened surface of the sintered body of the lithium-ion conductor prepared in Comparative Example 3 after the surface roughening treatment and an annealing treatment.

Description of Embodiments

The present invention will now be described in detail with reference to the embodiments and the accompanying drawings.

(Configuration of lithium-ion recovery device)

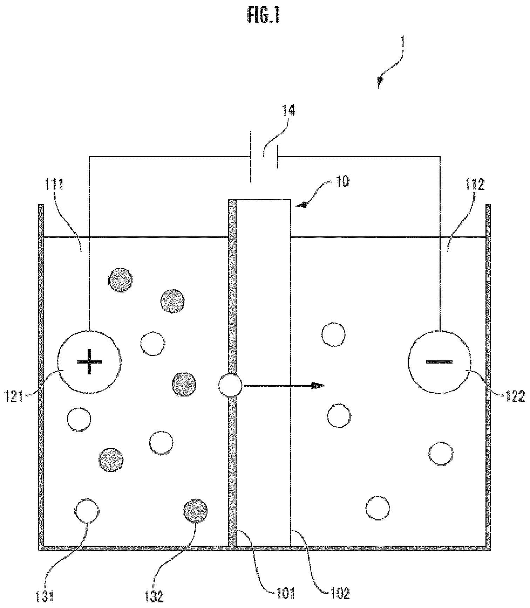

FIG. 1 is a diagram showing the configuration of a lithium-ion recovery device 1 that uses a lithium-selective permeable membrane 10. As shown in FIG. 1, the lithium-ion recovery device 1 includes a lithium-selective permeable membrane 10, a first electrode 121, and a second electrode 122. The configuration of the lithium-selective permeable membrane 10 is described later, but the lithium-selective permeable membrane 10 allows lithium ions 131 contained in a raw solution 111, which is a first liquid, to selectively permeate therethrough. By allowing the lithium ions 131 to selectively permeate through from the raw solution 111, which contains a plurality of ions, the lithium-selective permeable membrane 10 causes the lithium ions 131 in the raw solution 111 to move to a recovery liquid 112, which is a second liquid. In this case, it is preferable that the lithium-selective permeable membrane 10, which has high selective permeability, is used together with electrodes and the like configured to enhance this permeability.

The first electrode 121 and the second electrode 122 are arranged so that each electrode respectively faces one main surface (left surface) and the other main surface (right surface) of the lithium-selective permeable membrane 10 in FIG. 1. Here, the first electrode 121 is the anode and the second electrode 122 is the cathode of the lithium-ion recovery device 1, and the first electrode 121 and the second electrode 122 may or may not be in direct contact with the lithium-selective permeable membrane 10. With this configuration, the potential difference between one main surface and the other main surface of the lithium-selective permeable membrane 10 is kept constant. As the materials for the first electrode 121 and the second electrode 122, it is preferable to appropriately use, respectively, the components in the raw solution 111 or the recovery liquid 112 and a conductive material that does not cause a chemical reaction. In this case, the materials for the first electrode 121 and the second electrode 122 may be the same as each other, or may be different from the viewpoint of ionization tendency.

The raw solution 111 is an aqueous solution, for example, obtained by treating salt lake brine, lithium ore, industrial waste (such as discarded lithium secondary batteries), or seawater, and is an aqueous solution containing lithium ions 131. The raw solution 111 is fed to the lithium-ion recovery device 1 from the sea, a salt lake, or a raw solution storage tank by a raw solution pipe and a pump (not shown), for example. The pH of the raw solution 111 may be adjusted from the viewpoint of increasing the lithium ion permeation rate and thus the lithium-ion recovery rate. In this case, it is preferable to make the raw solution 111 alkaline, as disclosed in Patent Literature 1, but the raw solution 111 may be non-alkaline. Further, when seawater is used as the raw solution 111, a solution in which monovalent ions (lithium ions, sodium ions, etc.) have been separated in advance using a cation exchange membrane may be used as the raw solution 111.

The recovery liquid 112 is an aqueous solution containing the lithium ions 131 that have permeated through from the raw solution 111. The recovery liquid 112 is discharged from the lithium-ion recovery device 1 by a recovery liquid pipe and a pump (not shown), and can be stored in a recovery liquid storage tank or the like. The lithium ions 131 may then be collected as carbonate precipitates by carrying out $CO_2$ bubbling, for example, in the recovery liquid storage tank or the like.

The first electrode 121 and the second electrode 122 are connected via conductive lead wires or the like, and a direct-current power source 14 is arranged between the lead wires to maintain a constant potential difference between the first electrode 121 and the second electrode 122. The shape of the first electrode 121 and the second electrode 122 is not particularly limited. For example, it is preferable that the first electrode 121 and the second electrode 122 have a mesh shape like that disclosed in Patent Literature 1, and are fixed to the lithium-selective permeable membrane 10. Further, for example, a current collector made of a carbon felt sheet or the like may be arranged between the lithium-selective permeable membrane 10 and each of the mesh-shaped first electrode 121 and second electrode 122. In addition, each of the first electrode 121 and second electrode 122 may be formed in a substantially plate shape, as in an existing Daniel cell.

The lithium-ion recovery device 1 that uses the lithium-selective permeable membrane 10 of this embodiment can recover the lithium ions 131 by applying a voltage, or may be used as a battery that extracts power without the application of an external voltage. In this case, in the process of causing the lithium ions 131 to move from the raw solution 111 to the recovery liquid 112, a voltage is generated that makes the first electrode 121 a negative electrode and the second electrode 122 a positive electrode. On the other hand, when a voltage is applied to the lithium-ion recovery device 1, the flow of the lithium ions 131 can be made larger than when no voltage is applied, and the recovery efficiency of the lithium ions 131 can be increased.

The lithium-selective permeable membrane 10 may be composed of only a lithium-ion conductor, or may be composed of a composite of the lithium-ion conductor and another material that does not have lithium-ion conductivity. The lithium-selective permeable membrane 10 may be, for the purpose of improving flexibility, a composite of lithium-ion conductor particles and a resin. The lithium-selective permeable membrane 10 may also be, for the purpose of improving strength, a composite of a thin-film lithium-ion conductor and a porous support that supports the thin-film lithium-ion conductor. From the viewpoint of the complexity of the production process and production costs, it is preferable that the lithium-selective permeable membrane 10 is composed of a sintered body of the lithium-ion conductor alone.

The lithium-selective permeable membrane 10 is provided so as to separate the raw solution 111, which contains a plurality of ions including the lithium ions 131 and unspecified ions 132 (ions other than the lithium ions 131), from the recovery liquid 112 from which the lithium ions 131 are to be recovered. In this case, the lithium-selective permeable membrane 10 needs to be provided so that a surface-roughened surface 101 formed by a surface roughening treatment described later faces the raw solution 111. The lithium-selective permeable membrane 10 may be formed in a spherical, cylindrical, or regular octahedral shape, and may have at least one or more recesses or protrusions on a part of a plate shape or any of the shapes listed above. In this case, the shape of the lithium-selective permeable membrane 10 is not particularly limited as long as the lithium-selective permeable membrane 10 can separate the raw solution 111 and the recovery liquid 112. Further, the surface-roughened surface 101, which is described later, may be provided in accordance with the electric field generated in the lithium-ion recovery device 1. For example, the surface-roughened surface 101 may be provided in a region of the surface facing the raw solution 111 in which the electric flux density perpendicular to the surface generated when a voltage is applied to the lithium-ion recovery device 1 is relatively large.

The lithium-selective permeable membrane 10 has a surface-roughened surface 101 (shown by the thick line in FIG. 1). The surface-roughened surface 101 is provided on a part or all of the outer surface of the lithium-selective permeable membrane 10. As described above, the surface-roughened surface 101 needs to be provided so as to face the raw solution 111. In FIG. 1, a non-processed surface 102 that has not been subjected to surface roughening treatment is provided on the main surface of the lithium-selective permeable membrane 10 facing the recovery liquid 112. However, the present invention is not limited to this, and the main surface of the lithium-selective permeable membrane 10 that faces the recovery liquid 112 may have on a part or all of the main surface a surface-roughened surface 101, or all of the main surface may have the non-processed surface 102 that has not been subjected to surface roughening treatment.

The surface-roughened surface 101 is roughened by removing the surface layer of the sintered body by any surface roughening treatment method described later, and, an arithmetic mean height Ra of all or a part of the surface of the surface-roughened surface 101 is preferably 0.8 $\mu$m or more and 20 $\mu$m or less, more preferably 1.5 $\mu$m or more and 15 $\mu$m or less, and further preferably 2.0 $\mu$m or more and 10 $\mu$m or less. Further, in this embodiment, surface roughness is represented by Ra, but the surface roughness is not limited to this, and may be represented by the root mean square gradient Rdq. In this case, the surface root mean square gradient Rdq of all or a part of the surface of the surface-roughened surface 101 is preferably 10° or more and 80° or less, more preferably 12° or more and 70° or less, and further preferably 14° or more and 60° or less. The Ra and Rdq can be calculated using a stylus-type surface roughness meter. The measurement conditions for the all or a part of the surface are preferably evaluated using the reference length, measurement length, and cutoff value recommended in the standards of JIS B 0601-2001 or ISO 4287-1997 according to the degree of surface roughness.

In addition, the surface of all or a part of the surface-roughened surface 101 in this embodiment may be represented by a developed interfacial area ratio Sdr, which is a surface roughness parameter. In this case, the developed interfacial area ratio Sdr is preferably 0.2 or more and 2 or less, more preferably 0.3 or more and 1.8 or less, and further preferably 0.5 or more and 1.5 or less. The developed interfacial area ratio Sdr, which is a surface roughness parameter, can be calculated using a non-contact surface roughness meter.

In addition, it is preferable that a step-and-terrace structure is absent on the sintered body particles of all or a part of the surface of the surface-roughened surface 101 in this embodiment. The presence or absence of a step-and-terrace structure on the surface-roughened surface 101 can be determined, for example, by checking an SEM image of the surface.

In this embodiment, it is preferable that the surface-roughened surface 101 has a uniform surface so as to satisfy the above conditions, but the present invention is not limited to this. For example, two or more surface-roughened surfaces 101 having different configurations may be included. In this case, it is preferable that at least one of the surface-roughened surfaces 101 satisfies the conditions relating to the surface roughness or the presence or absence of a step-and-terrace structure. Further, in this case, the plurality of surface-roughened surfaces 101 may change intermittently or continuously in the horizontal direction of the surface. The conditions of these surface-roughened surfaces 101 can be adjusted according to the design of the lithium-ion recovery device 1.

The material of the lithium-selective permeable membrane 10 of this embodiment is not particularly limited as long as it is a material that allows the lithium ions 131 to selectively permeate therethrough. From the viewpoint of allowing the lithium ions 131 to permeate through the membrane and suppressing reactions with water and other aqueous solutions, it is preferable to use, as the material of the lithium-selective permeable membrane 10, a lithium lanthanum titanate, which is an ultra-lithium-ion conductor that has high ionic conductivity with respect to the lithium ions 131 and does not react with water or components in the aqueous solution. As the lithium lanthanum titanate, it is preferable to use a lithium lanthanum titanate of $Li_xLa_{(2-x)/3}TiO_3$, where $x < 2/3$, and more preferably $Li_{0.29}La_{0.57}TiO_3$.

The lithium-selective permeable membrane 10 can be made of a lithium-ion conductor having a perovskite-type crystal structure, represented by lithium lanthanum titanate, a lithium-ion conductor having a NASICON-type crystal structure, a lithium-ion conductor having a garnet-type crystal structure, or the like. Further, the material is not limited to the above-described crystal structures, and any material can be used as the lithium-selective permeable membrane 10 as long as it is an ion conductor having high a lithium-ion conductivity and can exist stably in the raw solution 111 and the recovery liquid 112 during recovering of the lithium ions.

Further, the lithium-ion permeation rate of the lithium-selective permeable membrane 10 in this embodiment is, from the viewpoint of being able to sufficiently recover the lithium ions 131, in a lithium permeation test in a temperature range of 22°C or more and 24°C or less, preferably 0.4 mmol/(hr·cm²·(mol/L)) or more, more preferably 0.5 mmol/(hr·cm²·(mol/L)) or more, and further preferably 0.6 mmol/(hr·cm²·(mol/L)) or more. The above lithium permeation rate is calculated from the following formula (1).

$$V = M/(T{\cdot}S{\cdot}C) \; (1)$$

Here, M is the permeation amount (mmol) of the lithium ions 131 that have permeated through the lithium-selective permeable membrane 10, T is the time (hr) required for permeation of the lithium ions 131 in the permeation amount M, S is the effective membrane area (cm²) of the lithium-selective permeable membrane 10, and C is the lithium ion concentration (mol/L) in the raw solution 111.

(Method for producing lithium-selective permeable membrane)

Next, a method for producing the lithium-selective permeable membrane 10 of this embodiment will be described. The lithium-selective permeable membrane 10 may be composed of only a lithium-ion conductor, or may be composed of a composite of the lithium-ion conductor and another material that does not have lithium-ion conductivity. The structure of the lithium-selective permeable membrane 10 needs to be a structure without through holes because it is necessary to separate the raw solution 111 and the recovery liquid 112 with the lithium-selective permeable membrane 10. There is no particular limitation on the method for producing the lithium-selective permeable membrane 10 without through holes, but it is preferable to use a densified sintered body as the lithium-ion conductor. The procedure for preparing this sintered body is to crush particles capable of forming the sintered body as the desired lithium-ion conductor to a desired particle size range, granulate as necessary, mix with optional additives such as a sintering aid, a dispersant, a pore former, a release agent, and a binder, and mold into an arbitrary shape (a shape that is appropriate for the lithium-ion recovery device 1 to be used). There are no particular limitations on the molding method, and the molding method may be appropriately selected according to the shape of the molded body to be prepared, such as sheet molding, uniaxial pressing, cold isostatic pressing, and warm isostatic pressing. The prepared molded body may be further mechanically processed into an arbitrary shape as necessary.

The molded body is then sintered, but a degreasing step may be performed before sintering in order to decompose or remove organic matter contained in the binder of the mixture or the like. The sintering temperature, sintering time, and other conditions in the sintering step are selected so that they are suitable for obtaining a sintered body as the desired lithium-ion conductor. For example, to obtain a sintered body of a lithium lanthanum titanate as the lithium-ion conductor, it is preferable to sinter in a temperature range of 1100°C or more and 1500°C or less for a holding time of 5 hours or more and 100 hours or less. At temperatures below 1100°C, sintering does not progress even over time, making it impossible to obtain a dense body. At temperatures above 1500°C, the molded body and the sintering member fuse and react with each other, making it impossible to obtain a good sintered body. From the viewpoint of suppressing changes in the structure or composition of the surface of the molded body due to the influence of the sintering atmosphere during sintering, the molded body may be buried in the same powder as the molded body, such as a mother powder or a cover powder, and then sintered.

Next, a part or all of the outer surface of the obtained sintered body (as-sintered body) is subjected to a surface roughening treatment, thereby providing a surface-roughened surface 101 on the outer surface of the lithium-selective permeable membrane 10. At this time, it is preferable that the surface-roughened surface 101 has an arithmetic mean height Ra of 0.8 $\mu$m or more and 20 $\mu$m or less, or a root mean square gradient Rdq of 10° or more and 80° or less, or a developed interfacial area ratio Sdr of 0.2 or more and 2 or less. However, the surface-roughened surface 101 is not limited to these ranges, and the values thereof may be within the numerical ranges described above.

The removal depth of the surface layer in the surface roughening treatment of the outer surface of the obtained sintered body (as-sintered body) is not particularly limited, but it is preferable to remove 5 $\mu$m or more. From the viewpoint that the structure and composition change due to the influence of the sintering atmosphere during sintering, it is preferable to change the removal depth depending on the material type or composition of the ion conductor, or the temperature or duration of the sintering step. For example, the removal depth may be adjusted according to the sintering time, or the removal depth may be adjusted according to the sintering temperature and the sintering time. In this case, the removal depth of the surface layer is preferably adjusted to a portion where the surface-roughened surface 101 has a target structure, composition, or particle size distribution.

In the above-described surface roughening treatment method, from the viewpoint of simultaneously removing the surface layer and forming a surface-roughened surface 101 having a surface roughness of Ra of 0.8 $\mu$m or more and 20 $\mu$m or less, or a root mean square gradient Rdq of 10° or more and 80° or less, or a developed interfacial area ratio Sdr of 0.2 or more and 2 or less, the surface roughening treatment is preferably performed based on a blasting treatment, and more preferably based on a sandblasting treatment. In this case, residual stress can be imparted to the sintered body, and the strength and durability of the sintered body are also improved. Further, this embodiment is not limited to a sandblasting treatment, and the treatment may be a blasting treatment such as a wet blasting treatment or a shot blasting treatment, dry or wet mechanical polishing, a chemical etching treatment, or the like. The abrasive grains used in the blasting treatment are not particularly limited, but may be alumina abrasive grains, SiC abrasive grains, glass abrasive grains, zircon abrasive grains, and the like.

If the sintered body is subjected to the above-described surface roughening treatment and then to a high-temperature heat treatment such as annealing, the surface structure or composition may change due to the influence of the sintering atmosphere during the heat treatment, as in the case of sintering. Therefore, after the surface roughening treatment, it is preferable to use the sintered body as the lithium-selective permeable membrane 10 without performing a heat treatment at a high temperature (generally, equal to or higher than the Debye temperature of the material) at which the atoms constituting the lithium-ion conductor may diffuse.

By observing the surface morphology of the lithium-selective permeable membrane 10, it is possible to determine whether the surface of the lithium-selective permeable membrane 10 is a surface that has been roughened after the final heat treatment step or a surface that has not been roughened after the final heat treatment step. For example, in the case of a sintered body of a lithium lanthanum titanate, on the surface of the sintered body after sintering, there are steps at the interfaces (grain boundaries) of the crystal particles on the particle surfaces of the ceramic that constitutes the sintered body, and a striped pattern of a step-and-terrace structure is observed on the crystal particle surfaces as traces of grain growth due to sintering. On the other hand, for a surface-roughened surface 101 after the heat treatment, since the surface layer has been physically removed, the above-described steps along the grain boundaries and step-and-terrace structures as crystalline grain growth marks are not observed, and a surface morphology that corresponds to a surface roughening treatment method is observed. For example, in the case of a blasting treatment, a rough surface with no regularity is formed. In addition, in the case of mechanical polishing, linear scratches like those seen in polishing scratches are observed.

Therefore, since it is necessary to completely remove the portion of the surface-roughened surface 101 that has been affected by the sintering atmosphere during the heat treatment, it is preferable that the surface-roughened surface 101 does not have the step-and-terrace structures of the sintered body particle surface formed during the heat treatment. As described above, it is possible to easily determine whether the surface remains as it was after the heat treatment (sintering step or annealing step) or whether the surface has been sufficiently roughened after the final heat treatment.

The lithium-selective permeable membrane 10 of this embodiment can be obtained by the method described above, but the method for producing the lithium-selective permeable membrane 10 is not limited to the above method, and can be modified within the scope that can achieve the object of this embodiment.

(Evaluation of lithium permeation rate)

Lithium can be recovered by placing the lithium-selective permeable membrane 10 prepared by the above method in the lithium-ion recovery device 1 configured as described above, and applying a voltage to the first electrode 121 and the second electrode 122.

It is known that at this time the permeation rate of the lithium ions 131 that permeate through the lithium-selective permeable membrane 10 mainly depends on the temperature of the lithium-selective permeable membrane 10, the pH of the raw solution 111, and the lithium ion concentration in the raw solution 111. Therefore, when evaluating the lithium permeation rate, it is preferable to calculate the lithium permeation rate as the lithium ion permeation amount (unit: mmol/(hr·cm$^2$·(mol/L))) per unit area of the lithium-selective permeable membrane 10, and per unit time, and per lithium ion concentration in unit volume of the raw solution 111 under a constant temperature and a constant pH of the raw solution 111. With this definition of the lithium permeation rate, the lithium permeation rate can be compared and evaluated as the performance of the lithium-selective permeable membrane 10 itself.

The lithium ion permeation amount can be directly calculated by evaluating the lithium ion concentration of the raw solution 111 and the recovery liquid 112 before and after the lithium permeation test using ICP analysis or the like. The lithium ion permeation amount can also be calculated using the following formula (2) from the current value flowing when a voltage is applied to the lithium-ion recovery device 1.

$$M = It\alpha/nF \quad (2)$$

Here, M is the number of moles of lithium ions 131 that have permeated through the lithium-selective permeable membrane 10, I is the current value flowing through the device, t is time, F is the Faraday constant, and n is the valence (lithium ion is 1). Further, $\alpha$ represents current efficiency, and is a parameter indicating the proportion of the current value resulting from the permeation of lithium ions 131 among the current value flowing through the device, and takes a value between 0 and 1. For example, the amount of lithium ions 131 that have moved can be calculated by multiplying the area enclosed by the current-time curve obtained by measuring and recording the current at regular intervals while applying a constant voltage by the current efficiency, and dividing the result by the Faraday constant.

The current efficiency $\alpha$ is affected by the structure of the lithium-ion recovery device 1 and the presence or absence of electronic conductivity of the lithium-selective permeable membrane 10. The current efficiency $\alpha$ can be obtained by calculating the actual value of the lithium ion permeation amount by determining the amount of lithium ions 131 contained in the recovery liquid 112 by ICP analysis or the like, calculating the theoretical value of the lithium ion permeation amount from the total current value flowing assuming $\alpha$=1 using formula (2), and dividing the actual value of the lithium ion permeation amount by the theoretical value.

The lithium ion permeation rate defined above can be determined by dividing the lithium ion permeation amount calculated by the above method by the total time required for permeation, further dividing by the effective membrane area of the lithium-selective permeable membrane 10, and further dividing by the lithium ion concentration in the raw solution 111.

Examples

Next, examples of this embodiment will be described with reference to experimental results. The experimental results described in each example and comparative example are summarized in Table 1.

(Preparation of lithium-selective permeable membrane)

The particle size of a lithium lanthanum titanate powder (manufactured by Toho Titanium Co., Ltd.) was adjusted by ball milling, and a binder, dispersant, plasticizer, and solvent were added to prepare a slurry. The obtained slurry was molded into a sheet and dried to obtain a green sheet having a thickness of about 700 um.

The obtained green sheet was sandwiched between porous ceramic plates and heat-treated in air at 1000°C for 3 hours to perform degreasing and calcination. At this time, for comparison, in Comparative Example 3 described later, both sides of the prepared green sheet were sandwiched between #200 nylon mesh sheets, which were then sandwiched between metal plates and subjected to uniaxial pressing. This resulted in #200 mesh marks being formed on both sides of the green sheet, thereby roughening the surface. After the green sheet had been roughened, the sheet was subjected to degreasing, and was then calcined by heat treating at 1000°C for 3 hours in air.

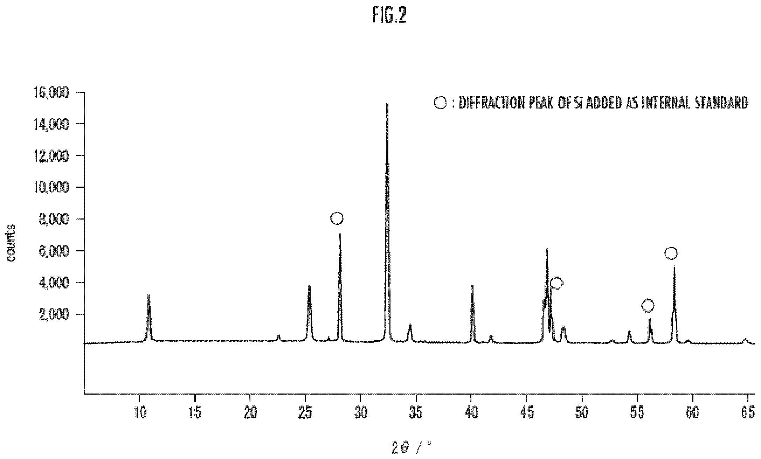

Then, the calcined body was sandwiched between dense ceramic bottom boards and sintered by heat treating at 1230°C for 72 hours in air. A dense ceramic sheet that was free of through holes in which the obtained sintered body had a relative density of 98% or more was obtained. FIG. 2 shows the results of powder X-ray diffraction measurement (CuK$\alpha$ source) performed by crushing the obtained ceramic sheet and adding silicon powder as an internal standard. From the results in FIG. 2, it was confirmed that the obtained ceramic sheet was composed of a crystalline phase of a lanthanum lithium titanate (the desired ionic conductor).

(Implementation of surface roughening treatment)

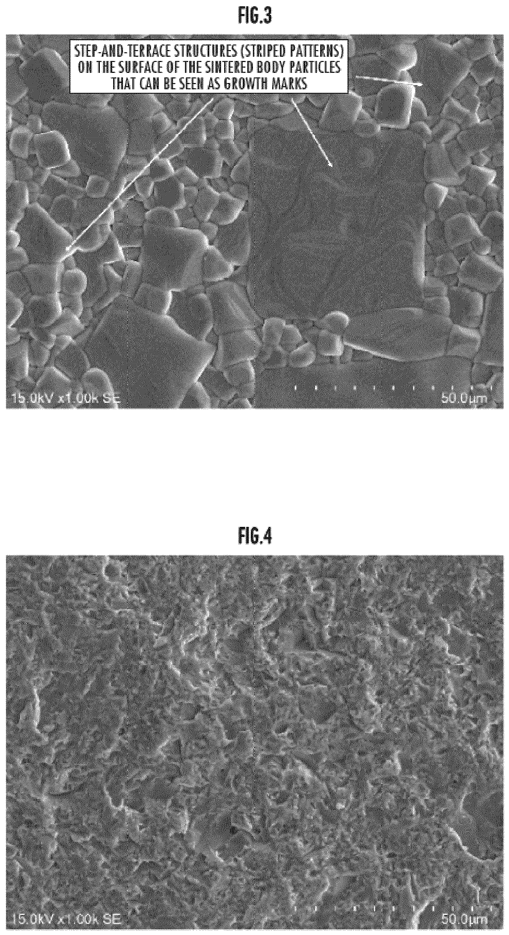

Next, the ceramic sheet of the obtained sintered body was cut to about 50 mm × 50 mm, and a central region of 40 mm × 40 mm on both sides was subjected to a surface roughening treatment by the method described in Table 1, to obtain Examples 1 to 4 and Comparative Examples 1 to 4. At this time, the removal depth of the surface layer was calculated by measuring the difference in thickness of the ceramic sheet before and after the blasting treatment. In Comparative Example 3, after the surface roughening treatment, the ceramic sheet that had been subjected to the surface roughening treatment was annealed again by heat treatment at 1230°C for 72 hours. FIG. 3 is a SEM image of the surface of the sintered body before the surface roughening treatment in Example 1, and FIG. 4 is a SEM image of the surface-roughened surface 101 of the sintered body after the surface roughening treatment. As can be seen in FIG. 3, on the surface of the sintered lithium lanthanum titanate sintered body, there are steps along the interfaces (grain boundaries) of the ceramic crystal grains, and on the surface of some crystal grains, a stepped striped pattern consisting of a step-and-terrace structure was observed as traces of grain growth during sintering. On the other hand, as can be seen in FIG. 4, on the surface-roughened surface 101 that was subjected to the surface roughening treatment by a blasting treatment, no steps along the grain boundaries or step-and-terrace structures on the crystal particle surfaces as seen in FIG. 3 were observed, and a rough surface without regularity was observed. In addition, although not shown, on the surface-roughened surface 101 after the surface roughening treatment in each of Examples 2 to 4 and Comparative Examples 1 and 2, no steps along the grain boundaries or step-and-terrace structures on the crystal particle surfaces as seen in FIG. 3 were observed.

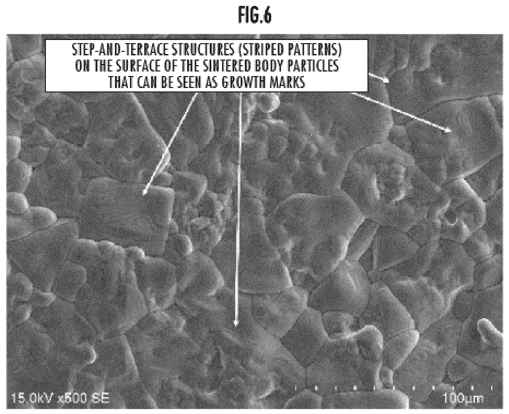

FIG. 6 is an SEM image of the surface-roughened surface of Comparative Example 3, which had been subjected to annealing by heat treating at 1230°C for 72 hours after the surface roughening treatment. Even for the surface-roughened surface 101 roughened by the blasting treatment, the atoms were rearranged by the subsequent annealing, and similar to the surface after sintering, steps along the grain boundaries and step-and-terrace structures as crystalline grain growth marks were observed. Although not shown, similar step-and-terrace structures were also observed in Comparative Example 4.

[Table 1]

[Table 1]

| Example No. / Comparative Example No. | Surface roughening treatment before sintering | Surface grinding treatment after sintering | | Heat treatment after surface grinding |
|---|---|---|---|---|
| | Treatment presence/absence (method) | Grinding method | Amount of surface grinding (um) | Treatment presence/absence (conditions) |
| Example 1 | not carried out | blast treatment, silicon carbide, #400 | 11 | not carried out |
| Example 2 | not carried out | blast treatment, alumina, #400 | 8 | not carried out |
| Example 3 | not carried out | blast treatment, silicon carbide, #100 | 10 | not carried out |
| Example 4 | not carried out | blast treatment, silicon carbide, #60 | 8 | not carried out |
| Comparative Example 1 | not carried out | no treatment | 0 | not carried out |
| Comparative Example 2 | not carried out | manual polishing, sandpaper, #1200 | 11 | not carried out |
| Comparative Example 3 | not carried out | blast treatment, silicon carbide, #100 | 50 | carried out (1230°C, 72 hours) |
| Comparative Example 4 | carried out (texturing treatment) | no treatment | 0 | not carried out |

(Evaluation of surface roughness of lithium-selective permeable membrane)

The line roughness of the surface (surface-roughened surface 101) of the ceramic sheets of Examples 1 to 4 and Comparative Examples 1 to 4 prepared by the above-described method was measured. At this time, in Comparative Examples 1 and 4, which were not subjected to a surface roughening treatment, the line roughness of the non-processed surface 102 was measured. When determining the line roughness, the arithmetic mean height Ra and the root mean square gradient Rdq were measured using a stylus-type surface roughness meter (Form Talysurf PGI1250A, manufactured by Taylor Hobson). The evaluation length and cutoff value ($\lambda$c) were chosen based on the degree of surface roughness, and the values recommended in the JIS B 0601-2001 or ISO 4287-1997 standards were used. Measurements were performed at five arbitrary positions on the surface-roughened surface 101 to be measured on the ceramic sheet. During the measurements, the scanning direction of the stylus was also freely selected each time. The average value was calculated from the obtained measurement results at the five points, and this average value was taken as the line roughness value.

Next, the surface roughness of the surfaces (all surfaces) of the ceramic sheets of Examples 1 to 4 and Comparative Examples 1 to 4 prepared by the above-described method was measured. At this time, in Comparative Examples 1 and 4, which were not subjected to a surface roughening treatment, the surface roughness of the non-processed surface 102 was measured. The surface roughness was measured using an optical interference type non-contact three-dimensional surface roughness measuring device (Talysurf CCI HD-XL, manufactured by Taylor Hobson). The measurement was performed in a mode for evaluating a "low reflectance rough surface" using a 20$\times$ objective lens (evaluation region 0.82 mm $\times$ 0.82 mm). Measurements were performed at three arbitrary positions on the surface-roughened surface 101 to be measured on the ceramic sheet. The average value was calculated from the obtained measurement results at the three points, and this average value was taken as the surface roughness. Table 2 shows the obtained line roughness and surface roughness in Examples 1 to 4 and Comparative Examples 1 to 4.

[Table 2]

[Table 2]

| Example No. / Comparative Example No. | Line roughness, surface roughness parameters of selective permeable membrane surface | | |
|---|---|---|---|
| | Arithmetic mean height Ra (um) | Root mean square gradient Rdq (°) | Developed interfacial area ratio Sdr |
| Example 1 | 0.88 | 12.33 | 0.241 |
| Example 2 | 0.96 | 14.43 | 0.292 |
| Example 3 | 2.40 | 14.38 | 0.388 |
| Example 4 | 4.60 | 18.77 | 0.633 |
| Comparative Example 1 | 0.34* | 9.03 * | 0.126* |
| Comparative Example 2 | 0.44* | 9.71* | 0.120* |
| Comparative Example 3 | 2.70 | 11.69 | 0.277 |
| Comparative Example 4 | 8.42 | 31.02 | 1.126 |
| (The "*" placed next to the numerical values means that the value is beyond the numerical value range of the present invention.) | | | |

(Evaluation of lithium permeation rate using lithium-selective permeable membrane)

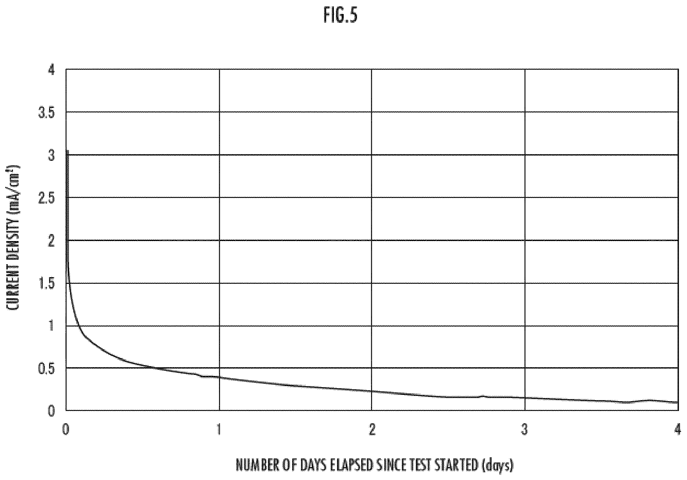

The ceramic sheets of Examples 1 to 4 and Comparative Examples 1 to 4 obtained by the above-described method were placed in a lithium-ion recovery device 1 as shown in FIG. 1 as the lithium-selective permeable membrane 10 (effective membrane area 40 mm $\times$ 40 mm), and a lithium recovery test was carried out. The temperature during the test was in the range of 22°C to 24°C. The raw solution 111 used in the test was a mixed aqueous solution of lithium hydroxide, sodium hydroxide, and potassium hydroxide having a lithium ion concentration, sodium ion concentration, and potassium ion concentration adjusted to 0.1 mol/L, 0.1 mol/L, and 0.1 mol/L, respectively. The recovery liquid 112 was pure water. The first electrode 121 (anode electrode) and the second electrode 122 (cathode electrode) were metal electrodes not easily corroded by the raw solution 111 and the recovery liquid 112, respectively. At this time, the test was performed in a state where the first electrode 121 and the second electrode 122 were electrically connected to the lithium-selective permeable membrane 10 by carbon felt. The voltage applied to the lithium-selective permeable membrane 10 was set to 5 V. During the test, the raw solution 111 and the recovery liquid 112 were sufficiently stirred so that the lithium ion concentrations in them were uniform. From the start of voltage application, the current value was recorded at intervals of about 30 seconds, and the test was continued for about 4 days (time in Table 3 described later). FIG. 5 shows the plotted results (current density) obtained by dividing the recorded current value by the effective membrane area in Example 1. As shown in FIG. 5, the current density monotonically decreased from the start of voltage application. This is because the lithium ion concentration in the raw solution 111 decreases with the permeation of the lithium ions 131.

The raw solution 111 before the start of the test and the recovery liquid 112 after the test time shown in Table 3 below had elapsed were sampled and subjected to ICP analysis, and the recovery rate (the proportion of each ion in the raw solution 111 that was recovered in the recovery liquid 112) of each of the lithium ions 131, sodium ions (unspecified ions 132) and potassium ions (unspecified ions 132) after the test time shown in Table 3 below had elapsed were measured. At this time, the recovery rate of the sodium ions and potassium ions were 0% in all of Examples 1 to 4 and Comparative Examples 1 to 4. In addition, the theoretical value of the lithium ion permeation amount calculated using formula (1) from the total amount of current flowing until the test time elapsed, and the current efficiency $\alpha$ calculated from the actual value of the lithium ion permeation amount by ICP analysis, were measured.

Further, using the $\alpha$ calculated by the above method, the lithium ion permeation amount (unit: mmol) from the start of voltage application until 1 hour had elapsed was calculated from formula (2). In addition, the lithium ion permeation rate at the beginning of the test was calculated by dividing the calculated amount by the time required (1 hour), the effective membrane area (16 cm$^2$), and the lithium ion concentration in the raw solution 111 (approximated to 0.1 mol/L since it was immediately after the start of the test). Table 3 shows the lithium ion recovery rate, theoretical lithium permeation amount, actual measured lithium permeation amount, current efficiency, and lithium permeation rate for each of Examples 1 to 4 and Comparative Examples 1 to 4 based on the calculation methods described above.

[Table 3]

[Table 3]

| Example No. / Comparative Example No. | Test time hr | Theoretical value of lithium permeation amount (mmol) | Actual measured value of lithium permeation amount (mmol) | Current efficiency $\alpha$ | Li recovery rate | Li permeation rate mmol/(hr·cm$^2$·(mol/L)) |
|---|---|---|---|---|---|---|
| Example 1 | 87 | 16.724 | 13.917 | 0.83 | 70% | 0.47 |
| Example 2 | 94 | 16.726 | 15.104 | 0.90 | 78% | 0.51 |
| Example 3 | 78 | 19.853 | 16.248 | 0.82 | 82% | 0.83 |
| Example 4 | 96 | 24.852 | 16.842 | 0.68 | 88% | 1.42 |
| Comparative Example 1 | 92 | 14.517 | 11.834 | 0.82 | 63% | 0.31* |
| Comparative Example 2 | 71 | 10.149 | 8.094 | 0.80 | 42% | 0.23 * |
| Comparative Example 3 | 98 | 14.378 | 12.223 | 0.85 | 62% | 0.23 * |
| Comparative Example 4 | 100 | 15.457 | 12.543 | 0.81 | 66% | 0.39* |
| (The "*" placed next to the numerical values means that the value is beyond the numerical value range of the present invention.) | | | | | | |

Referring to Table 3, it was revealed that the lithium ion permeation rate (0.47 to 1.42 mmol/(hr·cm$^2$·(mol/L))) of the lithium-selective permeable membrane 10 prepared in Examples 1 to 4 was significantly higher than the lithium ion permeation rate (0.31 mmol/(hr·cm$^2$·(mol/L))) of the lithium-selective permeable membrane 10 prepared in Comparative Example 1. This shows that an excellent lithium ion permeation rate can be obtained by roughening the surface of the sintered body. Further, referring to Tables 2 and 3, it was shown that the lithium ion permeation rate increases as the arithmetic mean height Ra of the roughened surface increases, or as the root mean square gradient Rdq increases, or as the developed interfacial area ratio Sdr increases.

The experimental results of Comparative Example 2 support the above. The lithium-selective permeable membrane 10 prepared in Comparative Example 2 had, similar to the lithium-selective membranes prepared in Examples 1 to 4, a surface-roughened surface 101 in which about 10 um of the surface layer was removed by surface roughening treatment after sintering. However, the lithium ion permeation rate of the lithium-selective permeable membrane 10 prepared in Comparative Example 2 was significantly smaller than the lithium ion permeation rate of the lithium-selective permeable membrane 10 prepared in Examples 1 to 4. This shows that even though for a surface-roughened surface 101 whose surface layer had been removed during sintering by a surface roughening treatment, the surface-roughened surface 101 did not have a sufficiently large arithmetic mean surface height Ra (0.8 $\mu$m or more), root mean square gradient Rdq (10° or more), or developed interfacial area ratio Sdr (0.2 or more), and therefore it was not possible to obtain an excellent lithium ion permeation rate like that in Examples 1 to 4. In other words, the importance of the surface roughness of the surface-roughened surface 101 was demonstrated.

Further, although the lithium-selective permeable membrane 10 prepared in Comparative Example 3 was subjected to a surface roughening treatment by the same method as in Example 3, annealing was performed after the surface roughening treatment, and on the surface-roughened surface, step-and-terrace structures formed due to the sintering atmosphere during the heat treatment were formed on the crystal particle surfaces. Therefore, the lithium permeation rate in Comparative Example 3 was much lower than that in Example 3. This result indicates that in order to obtain an excellent lithium permeation rate, it is not preferable for the surface of the sintered body included in the lithium-selective permeable membrane 10 to be in an as-sintered or as-annealed state, and it is necessary to remove the surface layer portion that is affected by the sintering atmosphere during the heat treatment.

The lithium-selective permeable membrane 10 prepared in Comparative Example 4 had a sintered body surface having an extremely large arithmetic mean height Ra, root mean square gradient Rdq, and developed interfacial area ratio Sdr due to the roughening treatment of the green sheet. However, as in Comparative Example 3, the surface was in an as-sintered state that had not been subjected to a surface roughening treatment after sintering, and so an excellent lithium permeation rate was not obtained.

The above results show that in order to obtain a lithium-selective permeable membrane 10 having an excellent lithium permeation rate, it is necessary to remove the surface layer portion that is affected by the sintering atmosphere during the heat treatment such as sintering or annealing by a surface roughening treatment. That is, this result shows that the step-and-terrace structures formed as growth marks on the surface of the sintered body surface particles during the heat treatment must be reliably removed from the surface-roughened surface 101, and in addition, it is necessary to form a surface-roughened surface 101 having a relatively large arithmetic mean height Ra, root mean square gradient Rdq, or developed interfacial area ratio Sdr.

The embodiment has been described based above on the examples. From this description, it has been shown that the lithium-selective permeable membrane 10 of this embodiment can reduce the time and cost required for lithium ion recovery. Therefore, the lithium-selective permeable membrane 10 of this embodiment can be a suitable member for recovering the lithium ions 131 from seawater or industrial waste (such as discarded lithium secondary batteries).

The lithium-selective permeable membrane 10 and method for producing the lithium-selective permeable membrane 10 of this embodiment have been described based on an embodiment and examples, but in addition to the above-mentioned examples and usage examples, this embodiment can be used within the intended technical scope thereof. In addition, the examples and usage examples of this embodiment can be modified and altered within the scope that can be easily modified and altered by those skilled in the art.

Reference Signs List

1 lithium-ion recovery device
10 lithium-selective permeable membrane
101 surface-roughened surface
102 non-processed surface
111 first liquid (raw solution)
112 second liquid (recovery liquid)
121 first electrode (anode)
122 second electrode (cathode)
131 lithium ions
132 unspecified ions

**Claims**

1. A lithium-selective permeable membrane comprising a sintered body of a lithium-ion conductor, wherein at least a part of a region of an outer surface of the lithium-selective permeable membrane is composed of a surface-roughened surface.

2. The lithium-selective permeable membrane according to claim 1, wherein at least one of following requirements (A), (B), and (C) is satisfied:

   (A) an arithmetic mean height Ra of all or a part of the surface of the surface-roughened surface is 0.8 $\mu$m or more and 20 $\mu$m or less;
   (B) a root mean square gradient Rdq of all or a part of the surface of the surface-roughened surface is 10° or more and 80° or less; and
   (C) a developed interfacial area ratio Sdr of all or a part of the surface of the surface-roughened surface is 0.2 or more and 2 or less.

3. The lithium-selective permeable membrane according to claim 1, wherein a step-and-terrace structure is absent on sintered body particles of all or a part of the surface of the surface-roughened surface.

4. The lithium-selective permeable membrane according to claim 1, wherein the lithium-ion conductor is a sintered body of a lithium lanthanum titanate.

5. The lithium-selective permeable membrane according to any of claims 1 to 4, wherein in a lithium permeation test in a temperature range of 22°C or more and 24°C or less, a lithium permeation rate V represented by following formula (1) is 0.4 mmol/(hr·cm$^2$·(mol/L)) or more,

$$V = M/(T{\cdot}S{\cdot}C) \qquad (1)$$

   wherein M is a permeation amount (mmol) of lithium ions that have permeated through the lithium-selective permeable membrane, T is a time (hr) required for permeation of lithium ions in the permeation amount M, S is an effective membrane area (cm$^2$) of the lithium-selective permeable membrane, and C is a lithium ion concentration (mol/L) in a raw solution.

6. A method for producing a lithium-selective permeable membrane that comprises a sintered body of a lithium-ion conductor, the method comprising:

   a sintering step of sintering a molded body that comprises a lithium-ion conductor; and
   a surface roughening treatment step of removing a surface layer of at least a part of a region of an outer surface of the sintered body and roughening the surface after the sintering.

7. The method for producing a lithium-selective permeable membrane according to claim 6, wherein at least one of following requirements (D), (E), and (F) is satisfied:

   (D) an arithmetic mean height Ra of all or a part of the surface of the sintered body surface roughened in the surface roughening step is 0.8 $\mu$m or more and 20 $\mu$m or less;
   (E) a root mean square gradient Rdq of all or a part of the surface of the sintered body surface roughened in the surface roughening treatment step is 10° or more and 80° or less; and
   (F) a developed interfacial area ratio Sdr of all or a part of the surface of the sintered body surface roughened in the surface roughening treatment step is 0.2 or more and 2 or less.

8. The method for producing a lithium-selective permeable membrane according to claim 6 or 7, wherein the surface roughening treatment step is performed by a blasting treatment.

FIG.1

FIG.2

○ : DIFFRACTION PEAK OF Si ADDED AS INTERNAL STANDARD

## FIG.3

STEP-AND-TERRACE STRUCTURES (STRIPED PATTERNS) ON THE SURFACE OF THE SINTERED BODY PARTICLES THAT CAN BE SEEN AS GROWTH MARKS

## FIG.4

EP 4 640 305 A1

FIG.5

## FIG.6

STEP-AND-TERRACE STRUCTURES (STRIPED PATTERNS) ON THE SURFACE OF THE SINTERED BODY PARTICLES THAT CAN BE SEEN AS GROWTH MARKS

## INTERNATIONAL SEARCH REPORT

| International application No. |
| --- |
| **PCT/JP2024/005107** |

| A. | CLASSIFICATION OF SUBJECT MATTER |
| --- | --- |

***B01D 69/02***(2006.01)i; ***B01D 61/46***(2006.01)i; ***B01D 71/02***(2006.01)i; ***C04B 35/462***(2006.01)i; ***C25B 1/16***(2006.01)i; ***C25B 13/02***(2006.01)i; ***C25B 13/04***(2021.01)i
FI:   B01D69/02; C25B13/04 301; C25B1/16; C25B13/02 301; B01D61/46 500; B01D71/02; C04B35/462

According to International Patent Classification (IPC) or to both national classification and IPC

| B. | FIELDS SEARCHED |
| --- | --- |

Minimum documentation searched (classification system followed by classification symbols)

B01D53/22; B01D61/00-71/82; C02F1/44; C02F1/46-1/48; C04B35/462; C25B1/16; C25B13/02; C25B13/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2015-034315 A (JAPAN ATOMIC ENERGY AGENCY) 19 February 2015 (2015-02-19) claims, examples | 1-8 |
| A | JP 2017-131863 A (NATIONAL INSTITUTES FOR QUANTUM & RADIOLOGICAL SCIENCE & TECHNOLOGY) 03 August 2017 (2017-08-03) claims, examples | 1-8 |
| A | JP 2019-141808 A (HIROSAKI UNIV.) 29 August 2019 (2019-08-29) claims, examples | 1-8 |
| A | JP 2017-088420 A (NGK SPARK PLUG CO., LTD.) 25 May 2017 (2017-05-25) claims, examples | 1-8 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/005107**

| Patent document cited in search report | | | Publication date (day/month/year) | Patent family member(s) | | | Publication date (day/month/year) |
|---|---|---|---|---|---|---|---|
| JP | 2015-034315 | A | 19 February 2015 | US claims, examples WO KR | 2016/0201163 2015/020121 10-2016-0040572 | A1 A1 A | |
| JP | 2017-131863 | A | 03 August 2017 | US claims, examples WO KR | 2019/0032230 2017/131051 10-2018-0098362 | A1 A1 A | |
| JP | 2019-141808 | A | 29 August 2019 | (Family: none) | | | |
| JP | 2017-088420 | A | 25 May 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017131863 A